(19)

Europäisches
Patentamt
European
Patent Office
Office européen
des brevets

(11)  **EP 4 421 200 A1**

(12)  **EUROPEAN PATENT APPLICATION**
published in accordance with Art. 153(4) EPC

(43) Date of publication:
**28.08.2024 Bulletin 2024/35**

(21) Application number: **22951910.3**

(22) Date of filing: **19.07.2022**

(51) International Patent Classification (IPC):
**C22C 38/00** (2006.01)   **C22C 38/58** (2006.01)
**C21D 8/06** (2006.01)   **C21D 9/02** (2006.01)

(52) Cooperative Patent Classification (CPC):
**B21F 3/02; C21D 8/06; C22C 38/00; C22C 38/02;
C22C 38/04; C22C 38/06; C22C 38/34;
C22C 38/44; C22C 38/48; C22C 38/50;
C22C 38/58; F16F 1/04;** C21D 9/02; Y02P 10/20

(86) International application number:
**PCT/JP2022/028039**

(87) International publication number:
**WO 2024/018520 (25.01.2024 Gazette 2024/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **NIPPON STEEL Stainless Steel Corporation
Tokyo 100-0005 (JP)**
• **Nippon Seisen Co., Ltd.
Osaka-shi, Osaka 541-0043 (JP)**

(72) Inventors:
• **TAKANO, Kohji
Tokyo 100-0005 (JP)**
• **SAKAI, Hiroki
Tokyo 100-0005 (JP)**
• **AKIURA, Tsuneo
Hirakata-shi, Osaka 573-8522 (JP)**
• **AKIZUKI,Takayuki
Hirakata-shi, Osaka 573-8522 (JP)**

(74) Representative: **Vossius & Partner
Patentanwälte Rechtsanwälte mbB
Siebertstrasse 3
81675 München (DE)**

(54)  **HIGH STRENGTH STAINLESS STEEL WIRE AND SPRING**

(57)  A high-strength stainless-steel wire containing C, Si, Mn, P, S, Ni, Cr, N, Al, O, Ca, a total of Ti, Nb, Ta, and W of 0.50% or less, the balance of Fe and impurities, in which the value of Md30 represented by (1) is 0 to 30 (°C), a strength of the steel wire is 1,800 MPa or more, a deformation-induced martensite amount is 20 to 80 vol.%, and a tensile residual stress of a surface layer of the steel wire in a longitudinal direction is 500 MPa or less. Md30 (°C) = 551 - 462 (C + N) - 9.2Si - 8.1Mn - 29(Ni + Cu) - 13.7Cr - 18.5Mo ...(1) Here, an element symbol in Equation (1) is the (mass%) of each element in a chemical composition of a steel, and D is substituted in a case where the element is not contained.

**EP 4 421 200 A1**

**Description**

[Technical Field]

The present invention relates to a high-strength stainless-steel wire for a spring and a spring, and relates to a technology for achieving both a fatigue resistance characteristic and a heat deformation resistance of an austenitic stainless-steel wire in a warm region.

[Background Art]

Since a stainless-steel spring has an excellent corrosion resistance, the stainless-steel spring has been frequently used for industrial equipment, automobile parts, and the like. In addition, in recent years, the needs for weight reduction have increased, and studies have been conducted regarding an increase in strength. In a case where a stainless-steel wire, which is a material of a stainless-steel spring, is increased in strength, a problem of vertical cracks during wire drawing occurs. Accordingly, a technology for preventing vertical cracks by controlling chemical components, the amount of deformation-induced martensite, the crystal grain diameter, or the amount of hydrogen is proposed (Patent Documents 1 and 2).

Meanwhile, in recent years, applications of high-strength stainless-steel springs have been expanded to for various uses. With the expansion of applications, there is also increasing needs for improvement of a fatigue resistance in a warm region and a heat deformation resistance in a warm region. For example, long-term uses of the stainless-steel springs in an environment, in which a temperature increases to approximately 200°C, such as an engine room of a vehicle or the like, have been increased. Therefore, it is required to cope with space saving, and to obtain a fatigue-resistant strength or a heat deformation resistance in a warm region (for example, approximately 200°C) in addition to an increase in the strength and weight reduction of the springs.

Patent Document 3 proposes a surface method for performing a surface carburizing treatment on a spring material consisting of an austenitic stainless steel in a fluorine gas atmosphere to improve a fatigue strength. However, since a surface treatment in the fluorine gas atmosphere requires a high cost due to the fact that the surface treatment require a long treatment time and is a special treatment, a technology for mass production performed with a wire drawing material is required, and also, there is no knowledge of a technology for improving the fatigue-resistant strength or heat deformation resistance in a warm region.

Patent Document 4 proposes that, in order to improve the heat deformation resistance, a deformation-induced martensite is generated and NiAl is finely precipitated in a metastable γ-based stainless-steel wire containing Mo and Al. However, it is difficult to secure a fatigue resistance characteristic due to Al, or Ti, and Nb-based inclusion.

As described above, in a high-strength austenitic stainless-steel wire for a spring of the related art, a technology for satisfying both the fatigue resistance characteristic and the heat deformation resistance in a room temperature to warm regions at approximately 200°C is not proposed.

[Citation List]

[Patent Documents]

[Patent Document 1]
Japanese Patent No. 3542239
[Patent Document 2]
Japanese Patent No. 4489928
[Patent Document 3]
Japanese Unexamined Patent Application, First Publication No. 2005-200674
[Patent Document 4]
Japanese Patent No. 6259579

[Summary of Invention]

[Technical Problem]

The present invention has been made in view of the above circumstances, and an object of the present invention is to provide a high-strength stainless-steel wire for a spring having a high strength, and excellent fatigue resistance and heat deformation resistance in a warm region, and a spring.

[Solution to Problem]

As a result of studies for solving the above problems, the present inventors have found that, in a strongly drawn metastable austenitic stainless-steel wire, a residual stress of a surface layer of a steel wire is reduced by controlling finish wire drawing, an amount of N effective for a nitrogen cluster during crystal grain refinement and aging of a wire, is contained, and a composition of a fine deoxidation product in the vicinity of a surface layer is controlled by controlling an amount of Al, an amount of O, and a solidification rate during casting, thereby satisfying both a fatigue-resistant strength and deformation of a high-strength spring material in a warm region. The present invention has been made based on this finding.

That is, the gist of the present invention is as follows.

[1] A high-strength stainless-steel wire, in which a chemical composition of steel includes, in terms of mass%:

C: 0.08% to 0.13%;
Si: 0.2% to 2.0%;
Mn: 0.3% to 3.0%;
P: 0.035% or less;
S: 0.008% or less;
Ni: 5.0% or more and less than 8.0%;
Cr: 14.0% to 19.0%;
N: 0.04% to 0.20%;
Al: 0.10% or less,
Mo: 0.012% or less,
Ca: 0.0040% or less;
the total of Ti, Nb, Ta, and W: 0.50% or less; and
the balance of Fe and impurities,
the value of Md30 represented by the following (1) is 0 (°C) to 30 (°C),
the strength of the steel wire is 1,800 MPa or more,
the deformation-induced martensite amount is 20 to 80 vol.%, and
the tensile residual stress of a surface layer of the steel wire in a longitudinal direction is 500 MPa or less.

$$\text{Md30 (°C)} = 551 - 462 (C + N) - 9.2Si - 8.1Mn - 29(Ni + Cu) - 13.7Cr - 18.5Mo$$

$$\dots(1)$$

Here, an element symbol in Equation (1) is a content (mass%) of each element in the chemical composition of a steel, and 0 is substituted in a case where the element is not contained.

[2] The high-strength stainless-steel wire according to [1],

in which Al, O, and Ca of the chemical composition are, in terms of mass%,
Al: 0.01% to 0.08%;
O: 0.005% or less, and
Ca: 0.0005% to 0.0040%, and
the average composition of a deoxidation product having a diameter of 1 to 2 μm in the steel includes Al: 10% to 35%, Ca: 5% to 30%, Cr: 10% or less, and Mn: 5% or less.

[3] The high-strength stainless-steel wire according to [1],

in which Al, O, and Ca of the chemical composition are, in terms of mass%,
Al: less than 0.01%;
O: 0.003% to 0.008%; and
Ca: 0.0010% or less,
an average composition of a deoxidation product having a diameter of 1 to 2 μm in the steel includes Al: less than 10%, Ca: less than 10%, Cr: 10% to 45%, and Mn: 10% to 30%.

[4] The high-strength stainless-steel wire according to any one of [1] to [3], further including, in terms of mass%, one or two or more of Mo: 0.1% to 2.0%, Cu: 0.8% or less, and V: 0.5% or less, instead of a part of Fe.

[5] A spring formed of the high-strength stainless-steel wire according to any one of [1] to [3].

[6] A spring formed of the high-strength stainless-steel wire according to [4].

[Advantageous Effects of Invention]

The high-strength stainless-steel wire of the present invention has a high strength and excellent fatigue resistance and heat deformation resistance in a warm region. Therefore, even when a spring is obtained, it is possible to satisfy both the fatigue-resistant strength and the heat deformation resistance in the warm region and reduce a weight of the spring, and realize a high durability in the warm region.

In addition, the spring of the present invention can satisfy both the fatigue-resistant strength and the heat deformation resistance in the warm region, reduce the weight of the spring, and realize the high durability in the warm region. In addition, the spring according to the present invention can be used as a coil spring for a precision component.

[Description of Embodiments]

In a high-strength stainless-steel wire of an embodiment of the present invention, a chemical composition of steel, in terms of mass%, includes C: 0.08% to 0.13%, Si: 0.2% to 2.0%, Mn: 0.3% to 3.0%, P: 0.035% or less, S: 0.008% or less, Ni: 5.0% or more and less than 8.0%, Cr: 14.0% to 19.0%, N: 0.04% to 0.20%, Al: 0.10% or less, O: 0.012% or less, Ca: 0.0040% or less, a total of Ti, Nb, Ta and W: 0.50% or less, the balance: Fe and impurities, a value of Md30 represented by the following (1) is 0 (°C) to 30 (°C), a strength of the steel wire is 1,800 MPa or more, a deformation-induced martensite amount is 20 to 80 vol.%, and a tensile residual stress of a surface layer of the steel wire in a longitudinal direction is 500 MPa or less.

$$Md30\ (°C) = 551 - 462\ (C + N) - 9.2Si - 8.1Mn - 29(Ni + Cu) - 13.7Cr - 18.5Mo$$

$$...(1)$$

Here, an element symbol in Equation (1) is a content (mass%) of each element in the chemical composition of a steel, and 0 is substituted in a case where the element is not contained.

In addition, a spring of the embodiment of the present invention is formed of the high-strength stainless-steel wire. The spring of the present embodiment is preferably a coil spring, and may be a compression coil spring, a tension coil spring, or a torsion coil spring.

Hereinafter, chemical components of the high-strength stainless-steel wire will be described. "%" regarding the chemical composition of the steel refers to mass%. In addition, a numerical range represented by "to" refers to a range including numerical values denoted before and after "to" as a lower limit value and an upper limit value. A numerical range, in which "more than" or "less than" is used with numerical values denoted before and after "to", refers to a range not including these numerical values as the lower limit value and the upper limit value.

C is contained in an amount of 0.08% or more in terms of mass% (hereinafter, all of % are in terms of mass%), in order to obtain a fatigue-resistant strength and a heat deformation resistance with a high strength (particularly, 1,800 MPa or more) after wire drawing processing and aging. However, when C is contained in an amount of more than 0.13%, a Cr carbide is precipitated on a grain boundary, and the fatigue resistance characteristic deteriorates. Accordingly, the amount of C is limited to 0.13% or less. The amount of C is preferably 0.09% to 0.12%.

Si is contained in an amount of 0.2% or more, in order to deoxidize and reduce coarse inclusions. However, when the Si is contained in an amount of more than 2.0%, the deoxidation product becomes coarse and the fatigue resistance characteristic deteriorates. Accordingly, the amount of Si is limited to 2.0% or less. The amount of Si is preferably 0.3% to 1.5%.

Mn is contained in an amount of 0.3% or more, in order for deoxidation or in order to control a deformation-induced martensite amount after wire drawing to a range of the present invention, reduce a surface layer residual stress of a wire drawing material, and prevent vertical cracks to obtain predetermined strength and a fatigue resistance characteristic. However, when Mn is contained in an amount of more than 3.0%, the amount of deformation-induced martensite after wire drawing decreases, the strength decreases, and the fatigue resistance characteristic and the heat deformation resistance decrease. Accordingly, an amount of Mn is limited to 3.0% or less. The amount of Mn is preferably 0.5% to 2.0%.

The amount of P is limited to 0.04% or less, because P embrittles a material by grain boundary segregation, generates microvoids or promote wire drawing vertical cracks and decreases the fatigue-resistant strength. The amount of P is preferably 0.03% or less. It is desirable that the amount of P is low. However, since the refining cost increases, an amount of 0.005% or more is allowed.

The amount of S is limited to 0.008% or less, because S forms a sulfide, generates microvoids during wire drawing and decreases the fatigue-resistant strength. The amount of S is preferably 0.005% or less. It is desirable that the amount of S is low. However, since a refining cost increases, the amount of 0.0001% or more is allowed.

Ni is contained in an amount of 5.0% or more, in order to secure a toughness after wire drawing, prevent wire drawing vertical cracks, and control deformation-induced martensite to the range of the present invention to obtain predetermined strength and fatigue-resistant strength. However, when Ni is contained in an amount of 8.0% or more, a desired deformation-induced martensite amount after the wire drawing decreases, and the strength and the fatigue-resistant strength decrease. Accordingly, the amount of Ni is limited to less than 8.0%. The amount of Ni is preferably 6.0% to 7.5%.

Cr is contained in an amount of 14.0% or more, in order to suitably set the amount of deformation-induced martensite and to secure corrosion resistance of a precision spring product or the like. However, when the Cr is contained in an amount more than 19.0%, the desired deformation-induced martensite amount after the wire drawing decreases, and the strength, the fatigue-resistant strength, and the heat deformation resistance deteriorate. Accordingly, the amount of Cr is limited to 19.0% or less. The amount of Cr is preferably 15.0% to 18.0%.

N is contained in an amount of 0.04% or more in terms of mass%, in order to obtain the fatigue-resistant strength and the heat deformation resistance with a high strength (particularly, 1,800 MPa or more) after the wire drawing processing and aging. N forms an N-based cluster in particularly in an aging heat treatment at 250°C to 550°C after wire drawing and spring processing, and is extremely effective for satisfying all of the strength, the fatigue-resistant strength, and the heat deformation resistance. However, when N is contained in an amount of more than 0.20%, a Cr carbonitride is precipitated on a grain boundary, and rather, the fatigue resistance characteristic deteriorates. Accordingly, the amount of N is limited to 0.20% or less. The amount of N is preferably 0.05% to 0.15%.

Ti, Nb, Ta, and W are strong carbonitride forming elements, and are effective in crystal grain refinement as crystal grain boundary pinning particles. Therefore, these elements may be contained in an amount of 0.05% or more in total. On the other hand, these elements generate coarse carbonitrides, promote the generation of microvoids and decrease the fatigue-resistant strength. Therefore, as necessary, the total amount of Ti, Nb, Ta, and W is limited to 0.50% or less and preferably 0.20% or less. The total content thereof is preferably 0.15% or less. Ti, Nb, Ta, and W may be contained at least one of the above, two or more thereof, or all of the above.

In addition, the high-strength stainless-steel wire of the present embodiment contains Al: 0.10% or less, a: 0.012% or less, and Ca: 0.0040% or less. Al and Ca are elements effective for promoting deoxidation, reducing the amount of various inclusions, and increasing the strength of the steel. In addition, β (oxygen) is contained as an impurity in the steel, and also is contained in a deoxidation product which will be described later. A lower limit of Al may be 0.001% or more, a lower limit of O may be 0.0001% or more, and a lower limit of Ca may be 0.0001% or more. The amounts of Al, Ca, and O will be described in detail in the description of the deoxidation product.

As a result of investigating an effect of each element on the amount of deformation-induced martensite in a base material after strong wire drawing processing of approximately 70%, Md30 (°C) represented by Equation (1) described above indicates an element having an effect on the amount of deformation-induced martensite and a degree of the effect thereof. In a case where a value of Md30 is lower than 0 (°C), the amount of deformation-induced martensite after the strong wire drawing processing is small, a tensile strength of the steel wire is less than 1,800 MPa, and the effect of the present invention is small. Accordingly, the value of Md30 is set to 0°C or higher. In addition, when the value of Md30 is higher than 30°C, the amount of deformation-induced martensite after the strong wire drawing processing is likely to exceed 80 vol.%, and a wire drawing vertical cracking property easily occurs. Accordingly, the value of Md30 is set to 30°C or lower.

In addition, the high-strength stainless-steel wire of the present embodiment may contain one or two or more of Mo: 0.1% to 2.0%, Cu: 0.8% or less, and V: 0.5% or less. A lower limit of Mo, Cu, and V may be 0% or more.

Mo is effective for the corrosion resistance. Accordingly, Mo may be contained in an amount of 0.1% or more as necessary. However, even when Mo is contained in an amount of more than 2.0%, the effect is saturated, and the amount of deformation-induced martensite is also decreased, thereby decreasing the strength or the fatigue strength. Therefore, the upper limit thereof is set to 2.0%.

Cu suppresses work hardening of austenite and decreases the strength of the steel wire after wire drawing. Accordingly, the amount of Cu is limited to 0.8% or less.

V generates fine carbonitride to reduce a crystal grain diameter of austenite, thereby improving the heat deformation resistance. Accordingly, V may be contained in an amount of 0.5% or less as necessary. However, when V is contained in an amount of more than 0.5%, the carbonitride becomes coarse, and generation of microvoids is promoted, such that the fatigue resistance characteristic deteriorates. Accordingly, the amount of V is limited to 0.5% or less. A lower limit of the amount of V may be 0.03% or more.

The balance other than the above are Fe and impurities. As the impurities, each of Pb, Bi, Sn, Co, and the like may be contained at a maximum of approximately 0.1%, and each of B, Mg, Zr, and REM may be contained at a maximum of approximately 0.01%.

In the present embodiment, hydrogen is preferably limited to 4 ppm or less as necessary, in order to suppress generation of microcracks after wire drawing and improve the fatigue-resistant strength.

A tensile strength of the high-strength stainless-steel wire of the present embodiment is 1,800 MPa or more, and preferably 2,000 MPa or more. In a case where the tensile strength is less than 1,800 MPa, the fatigue-resistant strength is insufficient. Therefore, the strength is set to 1,800 MPa or more by adjusting the chemical composition and a drawing processing rate of the steel. The tensile strength is preferably 2,000 MPa or more.

The amount of deformation-induced martensite in the high-strength stainless-steel wire is set in a range of 20 to 80 vol.%. In order to secure a strength of 1,800 MPa or more, the fatigue-resistant strength after aging, and heat deformation resistance, the amount of deformation-induced martensite is set to 20 vol.% or more by adjusting by the chemical composition and the wire drawing processing conditions. However, when the amount of deformation-induced martensite is more than 80 vol.%, microvoids are generated due to microcracks in a periphery of a deoxidation product or the carbonitride, and the fatigue-resistant strength deteriorates. Accordingly, the amount of deformation-induced martensite is limited to 80 vol.% or less. The amount of deformation-induced martensite is preferably 30 to 70 vol.%.

A residual stress of the surface layer of the steel wire in the longitudinal direction is set to 500 MPa or less. When a tensile residual stress of more than 500 MPa is present, the fatigue-resistant strength and heat deformation resistance of the spring after aging deteriorate. Accordingly, an upper limit thereof is set to 500 MPa or less. The residual stress is controlled by adjusting an area reduction rate of a final finish drawing ratio, a die angle of a die used for wire drawing processing, and a wire drawing speed. The residual stress is preferably 400 MPa or less.

Next, a more preferable content range of the deoxidation product. Al, Ca, and O contained in the stainless-steel wire of the present embodiment will be described. In the following description, a case where the amount of Al is 0.01% to 0.08% and a case where the amount of Al is less than 0.01% will be described separately.

(Case where the amount of Al is 0.01% to 0.08%)

In the stainless-steel wire of the present embodiment, Al, O, and Ca in the chemical composition are, in terms of mass%, Al: 0.01% to 0.08%, O: 0.005% or less, and Ca: 0.0005% to 0.0040%, and an average composition of a deoxidation product having a diameter of 1 to 2 μm in the steel preferably includes Al: 10% to 35%, Ca: 5% to 30%, Cr: 10% or less, and Mn: 5% or less. The amount of Cr is preferably 1% or more, and may be 2% or more. In addition, in order to refine an oxide, the chemical composition preferably includes Al: 10% to 35%, Ca: 5% to 30%, Cr: 2% to 9%, Mn: 3% or less.

Al reduces a deoxidation product by deoxidation and suppresses a coarse deoxidation product by containing Ca and controlling a solidification rate of a surface layer during casting to be fast (10 to 500 °C/s). Therefore, the fatigue-resistant strength of the high-strength stainless-steel wire and the spring is improved. In addition, fine AlN is generated to refine crystal grains of the high-strength stainless-steel wire to a range of 30 μm or less, thereby improving the heat deformation resistance. Therefore, Al is contained in an amount of 0.01% or more. However, when Al is contained in an amount more than 0.08%, strong deoxidation occurs, and a coarse deoxidation product or coarse AlN is generated, resulting in a decrease in the fatigue-resistant strength. Therefore, the amount of Al is limited to 0.01% to 0.08%. The amount of Al is preferably 0.015% to 0.05%.

Ca is contained together with Al to suppress a coarse deoxidation product and improve the fatigue-resistant strength. Accordingly, in a case where Al is contained in an amount of 0.01% or more, Ca is contained in an amount of 0.0005% or more. However, when Ca is contained in an amount more than 0.0040%, strong deoxidation occurs, and a coarse deoxidation product is generated, resulting in a decrease in the fatigue-resistant strength. Therefore, the amount of Ca is limited to 0.0040% or less. The amount of Ca is preferably 0.0010% to 0.0030%.

O affects the amount, the composition, and a size of the deoxidation product together with Al and Ca, To obtain a deoxidation product, O is limited to a range of 0.005% or less. The amount of O is more preferably 0.004% or less. The lower limit of O may be set to 0.0001% or more.

The high-strength stainless-steel wire of the present embodiment contains a deoxidation product having a diameter of 1 to 2 μm. The composition of such a fine deoxidation product is effective as an index showing a variation in a size distribution of the entire deoxidation product which greatly affects a fatigue. The average composition of the fine deoxidation product having a diameter of 1 to 2 μm preferably includes Al: 10% to 35%, Ca: 30% or less, Cr: 2% to 10%, and Mn: 5% or less, in terms of the average composition. In addition, the deoxidation product may contain O, Si, Ti, Fe, or the like as the balance.

Regarding the average composition of the deoxidation product, the deoxidation product is extracted from the high-strength stainless-steel wire by an electrolytic extraction method. Among the extracted precipitates and inclusions, the precipitates and inclusions having an equivalent circle particle diameter of 1 to 2 μm containing oxygen are defined as the deoxidation product. The amount of each element in a case where the extracted deoxidation product is subjected to elemental analysis by SEM/EDS and a total amount of the detected elements is set to 100%, is the average composition of the deoxidation product. A detailed measurement method will be described in examples. In the measurement, an extract containing oxygen is defined as the deoxidation product. In addition, the diameter of the deoxidation product is calculated by (major axis + minor axis)/2.

In the high-strength stainless-steel wire of the present embodiment, a formation temperature of the main deoxidation product is adjusted to be near a freezing point of the material to suppress the generation of the coarse deoxidation product and microvoids generated in the vicinity thereof. Accordingly, it is possible to improve the fatigue-resistant strength of the high-strength stainless-steel wire and the spring. In order to set the composition range of the deoxidation product in the range described above, it is important to control the amounts of Al, Ca, Si, Mn, and Cr which contribute to the deoxidation and a cooling rate during solidification during casting, and it is effective to adjust the components and perform rapid cooling to solidification such that the deoxidation product does not become coarse. Therefore, in the present invention, as necessary, the average composition of the deoxidation product having a diameter of 1 to 2 $\mu$m generated during the solidification is limited as described above.

(Case where amount of Al is less than 0.01%)

In the stainless-steel wire of the present embodiment, Al, O, and Ca in the chemical composition are, in terms of mass%, Al: less than 0.01%, O: 0.003% to 0.008%, and Ca: 0.0010% or less, and the average composition of a deoxidation product having a diameter of 1 to 2 $\mu$m in the steel may include Al: less than 10%, Ca: less than 10%, Cr: 10% to 45%, and Mn: 10% to 30%. In addition, the average composition preferably includes Al: 5% or more and less than 10%, Ca: less than 5%, Cr: 10% to 45%, and Mn: 10% to 30%.

By setting the amount of Al to less than 0.01%, and controlling the solidification rate of the surface layer during casting to 10 to 500°C/s, main components of the composition of the deoxidation product become Cr and Mn, and the deoxidation product is refined. Accordingly, the crystal grain diameter in the steel is reduced, the heat deformation resistance is improved, and the fatigue-resistant strength of a product is also improved. Therefore, the amount of Al is limited to less than 0.01%.

Ca generates a coarse deoxidation product together with Si, in a case where the amount of Al is low, and decreases the fatigue-resistant strength. Accordingly, in a case where the amount of Al is less than 0.01%, the amount of Ca is limited to 0.0010% or less. The amount of Ca may be 0.0001% or more.

O is limited to a range of 0.003% to 0.008%, in order to obtain the predetermined deoxidation product which affects the amount, the composition, and the size of the deoxidation product together with Al and Ca.

Even in a case where Al is set to less than 0.01%, the composition of the fine deoxidation product is effective as an index showing a variation in a size distribution of the entire deoxidation product. That is, when the average composition of the fine deoxidation product having a diameter of 1 to 2 $\mu$m is set to a composition containing Al: less than 10%, Ca: less than 10%, Cr: 10% to 45%, and Mn: 10% to 30%, the generation of coarse deoxidation product is suppressed, and the fatigue-resistant strength of the high-strength stainless-steel wire and the spring is improved. In addition, a crystal grain boundary is pinned and the crystal grains in the steel are refined to improve the heat deformation resistance of the fine deoxidation product. In order to set the composition of the deoxidation product in the range described above, it is effective to adjust the amounts of Al, Ca, Si, Mn, and Cr which contribute to the deoxidation to rapidly cool to solidify the steel during casting. Therefore, as necessary, the composition of the deoxidation product having a diameter of 1 to 2 $\mu$m is limited as described above. The balance of the composition of the deoxidation product may contain O, Si, Ti, Fe, or the like. An outline of a method for measuring the average composition of the deoxidation product is as described above.

The high-strength stainless-steel wire of the present embodiment is useful as a stainless-steel wire as a material of a spring. A wire diameter of the high-strength stainless-steel wire is preferably in a range of 0. 1 to 3.0 mm. In this case, it is easy to process the high-strength stainless-steel wire into, for example, a precision spring.

Hereinafter, a method for manufacturing the high-strength stainless-steel wire of the present embodiment will be described.

With respect to the high-strength stainless-steel wire of the present embodiment, a wire material having a diameter of 5.5 to 15.0 mm is obtained by casting molten steel prepared with predetermined components to obtain a cast slab and performing hot rolling on the obtained cast slab. Next, the obtained wire material is repeatedly subjected to wire drawing processing, an annealing treatment, and cooling to obtain a high-strength stainless-steel wire having a diameter of 0.1 to 3.0 mm.

When the molten steel is cast into a cast slab, a cooling rate during the casting is preferably controlled to 5 to 500 °C/s, in order to control the composition of a deoxidized oxide. The cooling rate is set to be an average cooling rate from a temperature immediately before casting (for example, a temperature of the molten steel in a tundish) to a cast slab surface temperature cooled to 1,300°C. When the cooling rate is less than 5 °C/s or more than 500 °C/s, a desired deoxidized oxide cannot be obtained, which is not preferable. The cooling rate may be 10 to 500 °C/s, 20 to 400 °C/s, or 40 to 300 °C/s.

Conditions of the hot rolling for the cast slab are not particularly limited. In addition to the hot rolling, hot forging may be performed as necessary.

As conditions for manufacturing the high-strength stainless-steel wire from a wire material formed of stainless steel, final cold wire drawing processing is performed with respect to an intermediate annealing material obtained by performing the cold wire drawing processing, the annealing treatment, and cooling at an intermediate stage. In the final cold wire drawing processing, an area reduction rate is set to a range of 55% to 85%. an area reduction rate of a final die is set to a range of 3% to 25%, preferably set to a range of 5% to 20%, and more preferably set to a range of 8% to 15%, and an approach angle of the final die is, as a half angle, set to a range of 3° to 15°, preferably set to a range of 4° to 10°, and more preferably set to a range of 5° to 8°. Through the wire drawing processing under such conditions, a high-strength stainless-steel wire, in which a strength is 1,800 MPa or more, a deformation-induced martensite amount in the steel is 20 to 80 vol.%, and a tensile residual stress of a surface layer of the steel wire in the longitudinal direction is 500 MPa or less, is obtained.

In addition, in order to manufacture a coil spring from the high-strength stainless-steel wire, a coiling step of helically winding the high-strength stainless-steel wire is performed, and then an aging treatment is performed. In the aging treatment, heating is preferably performed in a range of 250°C to 550°C for 10 to 300 minutes. The treatment temperature in the aging treatment may be in a range of 300°C to 450°C or in a range of 350°C to 400°C. The treatment time may be in a range of 20 to 200 minutes or in a range of 30 to 60 minutes.

The high-strength stainless-steel wire of the present embodiment has a high strength and excellent fatigue resistance and heat deformation resistance in a warm region. Accordingly, even in a case where the high-strength stainless-steel wire is set as the spring, both the fatigue-resistant strength and the heat deformation resistance in the warm region can be satisfied, a reduction of the weight of the spring, and a high durability in the warm region can be realized.

In addition, the spring of the present embodiment can satisfy both the fatigue-resistant strength and the heat deformation resistance in the warm region, reduce the weight of the spring, and realize high durability in the warm region.

[Examples]

(Experimental Example 1)

Steels having chemical compositions shown in Tables 1A and 1B were melted at approximately 1,600°C in a vacuum melting furnace of 150 kg, and cast into a casting mold having a diameter of 170 mm. The amount of O were changed by amounts of deoxidizing elements such as Al, Si, Mn, and the like, and a time from putting the deoxidizing elements to molten steel to tapping to the casting mold. The average cooling rate from a temperature immediately before casting (for example, the temperature of the molten steel in a tundish) to a cast slab surface temperature cooled to 1,300°C was set to 40°C/sec. Then, each cast slab was hot-rolled into a wire material having a diameter of 6 mm by hot rolling.

After that, an annealed material of the stainless-steel wire having a diameter of 3.0 to 4.5 mm was manufactured by further repeating wire drawing processing, annealing at 1,100°C, and rapid cooling. Subsequently, final wire drawing processing was performed with respect to the annealed material. Specifically, cold wire drawing processing having an area reduction rate of 55% to 80% was performed, the area reduction rate of a final die was set to 7%, and an approach angle, as a half angle, was set to 7° to finish as a steel wire having a diameter of 2.0 mm. By doing so, the high-strength stainless-steel wire was manufactured.

After that, the high-strength stainless-steel wire was subjected to an aging treatment at 400°C for 30 minutes assuming a coil spring to perform an N clustering treatment.

[Table 1A]

| Steel | Chemical composition n (mass%) balance: Fe and impurities | | | | | | | | | | | | | | | | Ti + Nb + Ta + W | Md30 (°C) | Note |
|---|---|---|---|---|---|---|---|---|---|---|---|---|---|---|---|---|---|---|---|
| | C | Si | Mn | P | S | Ni | Cr | N | Ti | Nb | Ta | W | Al | O | Ca | Others | | | |
| A | 0.08 | 0.5 | 1.1 | 0.032 | 0.002 | 7.2 | 17.2 | 0.06 | 0.04 | 0.05 | 0.03 | 0.02 | 0.04 | 0.008 | 0.0023 | | 0.14 | 28.4 | Example of invention |
| B | 0.11 | 0.6 | 0.9 | 0.019 | 0.003 | 7.1 | 17.1 | 0.06 | 0.03 | 0.05 | 0.02 | 0.02 | 0.07 | 0.005 | 0.0001 | | 0.12 | 19.5 | Example of invention |
| C | 0.09 | 0.5 | 1.2 | 0.025 | 0.004 | 7.3 | 17.3 | 0.06 | 0.04 | 0.06 | 0.01 | 0.03 | 0.008 | 0.003 | 0.0021 | | 0.14 | 18.7 | Example of invention |
| D | 0.09 | 0.4 | 1.1 | 0.020 | 0.003 | 7.2 | 17.2 | 0.07 | 0.06 | 0.03 | 0.01 | 0.02 | 0.009 | 0.007 | 0.0015 | | 0.12 | 20.1 | Example of invention |
| E | 0.09 | 0.7 | 0.8 | 0.021 | 0.002 | 6.9 | 17.3 | 0.08 | 0.03 | 0.03 | 0.03 | 0.05 | 0.002 | 0.012 | 0.0006 | | 0.14 | 22.4 | Example of invention |
| F | 0.08 | 0.5 | 0.9 | 0.029 | 0.002 | 7.0 | 17.1 | 0.08 | 0.04 | 0.04 | 0.01 | 0.03 | 0.012 | 0.006 | 0.0005 | | 0.12 | 27.9 | Example of invention |
| G | 0.12 | 0.6 | 0.9 | 0.019 | 0.002 | 7.2 | 16.9 | 0.07 | 0.05 | 0.03 | 0.02 | 0.03 | 0.04 | 0.004 | 0.0017 | | 0.13 | 10.1 | Example of invention |
| H | 0.09 | 0.3 | 1.1 | 0.020 | 0.001 | 7.4 | 17.3 | 0.06 | 0.03 | 0.02 | 0.03 | 0.02 | 0.07 | 0.002 | 0.0024 | | 0.10 | 18.4 | Example of invention |
| I | 0.11 | 1.8 | 1.0 | 0.017 | 0.003 | 6.8 | 17.1 | 0.08 | 0.02 | 0.03 | 0.02 | 0.03 | 0.002 | 0.008 | 0.0003 | | 0.10 | 7.1 | Example of invention |
| J | 0.10 | 0.6 | 0.5 | 0.024 | 0.003 | 6.7 | 17.3 | 0.09 | 0.02 | 0.04 | 0.01 | 0.02 | 0.007 | 0.007 | 0.0005 | | 0.09 | 22.3 | Example of invention |
| K | 0.10 | 0.5 | 2.8 | 0.030 | 0.003 | 6.8 | 16.9 | 0.08 | 0.03 | 0.05 | 0.01 | 0.02 | 0.009 | 0.005 | 0.0007 | | 0.11 | 11.8 | Example of invention |
| L | 0.08 | 0.5 | 1.8 | 0.016 | 0.002 | 5.3 | 17.0 | 0.18 | 0.04 | 0.03 | 0.02 | 0.01 | 0.003 | 0.006 | 0.0006 | | 0.10 | 25.1 | Example of invention |
| M | 0.11 | 0.6 | 0.7 | 0.010 | 0.002 | 7.9 | 16.6 | 0.01 | 0.05 | 0.03 | 0.01 | 0.02 | 0.03 | 0.003 | 0.0019 | | 0.11 | 14.0 | Example of invention |

| Steel | Chemical composition n (mass%) balance: Fe and impurities | | | | | | | | | | | | | | | | | Md30 (°C) | Note |
|---|---|---|---|---|---|---|---|---|---|---|---|---|---|---|---|---|---|---|---|
| | C | Si | Mn | P | S | Ni | Cr | N | Ti | Nb | Ta | W | Al | O | Ca | Others | Ti + Nb + Ta + W | | |
| N | 0.11 | 0.7 | 0.9 | 0.022 | 0.002 | 7.4 | 14.2 | 0.11 | 0.04 | 0.04 | 0.03 | 0.03 | 0.03 | 0.004 | 0.0027 | | 0.14 | 26.5 | Example of invention |
| O | 0.09 | 0.5 | 0.9 | 0.018 | 0.002 | 6.8 | 18.8 | 0.06 | 0.04 | 0.03 | 0.04 | 0.04 | 0.02 | 0.003 | 0.0030 | | 0.15 | 15.1 | Example of i invention |
| P | 0.10 | 0.4 | 1.0 | 0.015 | 0.004 | 7.2 | 16.8 | 0.09 | 0.04 | 0.06 | 0.02 | 0.01 | 0.002 | 0.005 | 0.0006 | Cu: 0.4 | 0.13 | 12.5 | Example of invention |
| Q | 0.10 | 0.5 | 1.1 | 0.021 | 0.003 | 6.9 | 17.1 | 0.08 | 0.03 | 0.03 | 0.02 | 0.06 | 0.003 | 0.005 | 0.0004 | Mo: 1.6 | 0.14 | 20.0 | Example of invention |
| R | 0.12 | 0.4 | 0.9 | 0.023 | 0.002 | 7.1 | 17.1 | 0.09 | 0.03 | 0.02 | 0.06 | 0.03 | 0.004 | 0.006 | 0.0004 | V: 0.4 | 0.14 | 2.8 | Example of invention |
| S | 0.09 | 0.5 | 0.9 | 0.019 | 0.002 | 7.3 | 17.1 | 0.06 | 0.08 | 0.15 | 0.05 | 0.03 | 0.02 | 0.004 | 0.0031 | | 0.31 | 23.8 | Example of invention |

[Table 1B]

| Steel | Chemical composition n (mass%) balance: Fe and impurities | | | | | | | | | | | | | | | | Ti + Nb + Ta + W | Md30 (°C) | Note |
| | C: | Si | Mn | P | S | Ni | Cr | N | Ti | Nb | Ta | W | Al | O | Ca | Others | | | |
|---|---|---|---|---|---|---|---|---|---|---|---|---|---|---|---|---|---|---|---|
| T | 0.09 | 0.6 | 0.8 | 0.020 | 0.004 | 7.2 | 1 17.1 | 0.10 | 0.02 | 0.03 | 0.03 | 0.01 | 0.11 | 0.003 | 0.0040 | | 0.09 | 8.2 | Comparative Example |
| U | 0.09 | 0.5 | 1.0 | 0.024 | 0.002 | 7.0 | 17.2 | 0.08 | 0.02 | 0.03 | 0.01 | 0.03 | 0.01 | 0.005 | 0.0051 | | 0.09 | 21.1 | Comparative Example |
| V | 0.06 | 0.5 | 1.4 | 0.033 | 0.002 | 7.6 | 17.5 | 0.06 | 0.02 | 0.03 | 0.01 | 0.04 | 0.03 | 0.004 | 0.0026 | | 0.10 | 19.5 | Comparative Example |
| W | 0.14 | 0.5 | 0.9 | 0.017 | 0.001 | 7.1 | 17.1 | 0.05 | 0.04 | 0.02 | 0.03 | 0.03 | 0.03 | 0.003 | 0.0022 | | 0.12 | 11.2 | Comparative Example |
| X | 0.10 | 0.1 | 1.0 | 0.022 | 0.002 | 7.1 | 17.3 | 0.09 | 0.05 | 0.02 | 0.01 | 0.02 | 0.002 | 0.013 | 0.0005 | | 0.10 | 11.3 | Comparative Example |
| Y | 0.09 | 2.2 | 1.0 | 0.013 | 0.001 | 6.9 | 17.2 | 0.05 | 0.04 | 0.03 | 0.01 | 0.01 | 0.01 | 0.003 | 0.0020 | | 0.09 | 8.4 | Comparative Example |
| Z | 0.09 | 0.4 | 0.1 | 0.025 | 0.002 | 7.0 | 17.1 | 0.07 | 0.05 | 0.04 | 0.01 | 0.01 | 0.03 | 0.003 | 0.0023 | | 0.11 | 35.3 | Comparative Example |
| ZA | 0.09 | 0.5 | 3.5 | 0.024 | 0.004 | 7.7 | 17.2 | 0.06 | 0.07 | 0.04 | 0.02 | 0.03 | 0.01 | 0.005 | 0.0016 | | 0.16 | -10.2 | Comparative Example |
| AA | 0.10 | 0.5 | 0.9 | 0.049 | 0.002 | 7.0 | 16.9 | 0.09 | 0.06 | 0.03 | 0.02 | 0.03 | 0.04 | 0.003 | 0.0021 | | 0.14 | 16.8 | Comparative Example |
| AB | 0.11 | 0.4 | 1.1 | 0.015 | 0.010 | 7.1 | 17.0 | 0.08 | 0.04 | 0.03 | 0.03 | 0.02 | 0.002 | 0.005 | 0.0003 | | 0.12 | 11.8 | Comparative Example |
| AC | 0.10 | 0.4 | 1.8 | 0.020 | 0.002 | 4.8 | 17.2 | 0.09 | 0.04 | 0.02 | 0.03 | 0.03 | 0.01 | 0.005 | 0.0034 | | 0.12 | 70.1 | Comparative Example |
| AD | 0.08 | 0.5 | 1.0 | 0.018 | 0.002 | 8.3 | 17.6 | 0.05 | 0.05 | 0.04 | 0.02 | 0.04 | 0.03 | 0.003 | 0.0024 | | 0.15 | -3.6 | Comparative Example |
| AE | 0.11 | 0.6 | 1.0 | 0.034 | 0.002 | 7.4 | 13.8 | 0.09 | 0.05 | 0.05 | 0.03 | 0.02 | 0.03 | 0.002 | 0.0018 | | 0.15 | 41.3 | Comparative Example |

(continued)

| Steel | Chemical composition n (mass%) balance: Fe and impurities | | | | | | | | | | | | | | | | Ti + Nb + Ta + W | Md30 (°C) | Note |
|---|---|---|---|---|---|---|---|---|---|---|---|---|---|---|---|---|---|---|---|
| | C: | Si | Mn | P | S | Ni | Cr | N | Ti | Nb | Ta | W | Al | O | Ca | Others | | | |
| AF | 0.08 | 0.6 | 1.2 | 0.021 | 0.004 | 7.4 | <u>19.3</u> | 0.06 | 0.04 | 0.06 | 0.03 | 0.01 | 0.03 | 0.002 | 0.0020 | | 0.14 | <u>-7.9</u> | Comparative Example |
| AG | 0.08 | 0.7 | 1.5 | 0.023 | 0.001 | 7.7 | 17.6 | <u>0.03</u> | 0.04 | 0.05 | 0.03 | 0.01 | 0.04 | 0.002 | 0.0022 | | 0.13 | 17.2 | Comparative Example |
| AH | 0.08 | 0.4 | 0.8 | 0.030 | 0.002 | 6.2 | 16.1 | <u>0.22</u> | 0.03 | 0.05 | 0.02 | 0.03 | 0.03 | 0.003 | 0.0017 | | 0.13 | 1.9 | Comparative Example |
| AI | 0.09 | 0.5 | 1.1 | 0.023 | 0.004 | 7.2 | 17.1 | 0.08 | 0.15 | 0.25 | 0.1 | 0.05 | 0.03 | 0.003 | 0.0029 | | <u>0.55</u> | 15.9 | Comparative Example |
| AJ | 0.09 | 0.5 | 0.8 | 0.023 | 0.004 | 7.3 | 17.0 | 0.08 | 0.03 | 0.05 | 0.01 | 0.03 | 0.002 | 0.006 | 0.0005 | <u>Cu: 1.0</u> | 0.12 | 16.8 | Comparative Example |
| AK | 0.09 | 0.4 | 1.1 | 0.012 | 0.003 | 7.4 | 17.1 | 0.06 | 0.02 | 0.04 | 0.01 | 0.02 | 0.003 | 0.007 | 0.0006 | <u>Mo: 2.2</u> | 0.09 | 20.2 | Comparative Example |
| AL | 0.09 | 0.6 | 1.0 | 0.025 | 0.003 | 6.8 | 17.0 | 0.08 | 0.05 | 0.05 | 0.02 | 0.03 | 0.003 | 0.006 | 0.0005 | <u>V: 0.7</u> | 0.15 | 28.7 | Comparative Example |
| Underlined parts shows that the values are beyond the range of the present invention. | | | | | | | | | | | | | | | | | | | |

Next, a crystal grain diameter of austenite of the annealed material having φ3.0 to 4.5 mm before final wire drawing, a deformation-induced martensite amount, the tensile strength, the residual stress of a surface layer in the longitudinal direction, the average composition of a fine deoxidation product of the surface layer, the heat deformation resistance, and the fatigue strength of the high-strength stainless-steel wire after the final wire drawing were measured. The results are shown in Tables 2A and 2B.

[Table 2A]

| No. | Steel | Crystal grain diameter of annealed material (μm) | Deformation-induced martensite amount (vol.%) | Tensile strength (MPa) | Surface layer residual stress (MPa) |
|---|---|---|---|---|---|
| 1a | A | 10 | 72 | 2090 | 420 |
| 2a | B | 34 | 63 | 2321 | 485 |
| 3a | C | 43 | 62 | 2214 | 390 |
| 4a | D | 42 | 61 | 2193 | 386 |
| 5a | B | 42 | 60 | 2181 | 389 |
| 6a | P | 29 | 71 | 2320 | 491 |
| 7a | G | 11 | 40 | 2210 | 280 |
| 8a | H | 10 | 40 | 1902 | 215 |
| 9a | I | 23 | 32 | 2307 | 234 |
| 10a | J | 31 | 60 | 2280 | 310 |
| 11a | K | 30 | 43 | 2208 | 210 |
| 12a | L | 18 | 60 | 2395 | 392 |
| 13a | M | 12 | 53 | 1930 | 304 |
| 14a | N | 13 | 62 | 2281 | 325 |
| 15a | O | 12 | 50 | 2222 | 329 |
| 16a | P | 24 | 52 | 2277 | 293 |
| 17a | Q | 33 | 61 | 2310 | 277 |
| 18a | R | 27 | 42 | 2186 | 200 |
| 19a | S | 14 | 58 | 2209 | 326 |
| 1b | T | 13 | 52 | 2214 | 285 |
| 2b | U | 14 | 60 | 2303 | 280 |
| 3b | V | 12 | 49 | 1750 | 292 |
| 4b | W | 12 | 51 | 2406 | 305 |
| 5b | X | 13 | 52 | 2120 | 318 |
| 6b | Y | 11 | 40 | 2313 | 321 |
| 7b | Z | 15 | 85 | 2485 | 604 |
| 8b | ZA | 20 | 10 | 1749 | 201 |
| 9b | AA | 13 | 50 | 2304 | 332 |
| 10b | AB | 28 | 53 | 2321 | 296 |
| 11b | AC | 25 | 90 | 2480 | 599 |
| 12b | AD | 11 | 10 | 1753 | 204 |
| 13b | AE | 14 | 85 | 2392 | 619 |

(continued)

| No. | Steel | Crystal grain diameter of annealed material (μm) | Deformation-induced martensite amount (vol.%) | Tensile strength (MPa) | Surface layer residual stress (MPa) |
|---|---|---|---|---|---|
| 14b | AF | 12 | 10 | 1746 | 221 |
| 15b | AG | 13 | 62 | 1752 | 310 |
| 16b | AH | 12 | 30 | 2345 | 295 |
| 17b | AI | 13 | 49 | 2233 | 323 |
| 18b | AJ | 32 | 30 | 1745 | 220 |
| 19b | AK | 27 | 10 | 1750 | 251 |
| 20b | AL | 35 | 70 | 2271 | 297 |
| Underlined parts shows that the values are beyond the range of the present invention. | | | | | |

[Table 2B]

| No. | Average composition of each element in deoxidation product having a size of 1 to 2 μm (mass%) | | | | Heat deformation resistance | Heat fatigue strength resistance | Note |
|---|---|---|---|---|---|---|---|
| | Al | Ca | Cr | Mn | | | |
| 1a | 39 | 5 | 2 | 2 | B | C | Example of invention |
| 2a | 36 | 2 | 0 | 1 | B | c | Example of invention |
| 3a | 10 | 33 | 3 | 2 | c | C | Example of invention |
| 4a | 5 | 15 | 16 | 14 | c | c | Example of invention |
| 5a | 2 | 1 | 20 | 19 | c | c | Example of invention |
| 6a | 18 | 3 | 11 | 11 | B | C | Example of invention |
| 7a | 28 | 15 | 6 | 3 | A | A | Example of invention |
| 8a | 24 | 20 | 1 | 2 | B | B | Example of invention |
| 9a | 5 | 2 | 31 | 22 | A | A | Example of invention |
| 10a | 8 | 2 | 27 | 20 | A | A | Example of invention |
| 11a | 5 | 2 | 26 | 21 | A | A | Example of invention |
| 12a | 3 | 1 | 25 | 20 | A | a | Example of indention |
| 13a | 21 | 20 | 5 | 2 | B | B | Example of invention |

(continued)

| No. | Average composition of each element in deoxidation product having a size of 1 to 2 μm (mass%) | | | | Heat deformation resistance | Heat fatigue strength resistance | Note |
|---|---|---|---|---|---|---|---|
| | Al | Ca | Cr | Mn | | | |
| 14a | 22 | 26 | 5 | 2 | A | A | Example of invention |
| 13a | 20 | 24 | 3 | 2 | A | A | Example of invention |
| 16a | 3 | 2 | 25 | 21 | A | A | Example of invention |
| 17a | 3 | 2 | 26 | 20 | A | A | Example of invention |
| 18a | 5 | 2 | 24 | 19 | A | A | Example of invention |
| 19a | 25 | 26 | 4 | 2 | A | B | Example of invention |
| lb | 42 | 1 | 2 | 2 | A | D | Comparative Example |
| 2b | 15 | 34 | 2 | 1 | A | D | Comparative Example |
| 3b | 20 | 21 | 2 | 1 | D | D | Comparative Example |
| 4b | 19 | 20 | 3 | 2 | A | D | Comparative Example |
| 5b | 2 | 0 | 38 | 23 | A | D | Comparative Example |
| 6b | 10 | 32 | 5 | 5 | A | D | Comparative Example |
| 7b | 22 | 19 | 3 | 2 | D | D | Comparative Example |
| 8b | 18 | 28 | 3 | 3 | D | D | Comparative Example |
| 9b | 21 | 20 | 4 | 2 | A | D | Comparative Example |
| 10b | 5 | 2 | 25 | 26 | A | D | Comparative Example |
| 11b | 19 | 27 | 3 | 3 | D | D | Comparative Example |
| 12b | 20 | 22 | 2 | 1 | D | D | Comparative Example |
| 13b | 25 | 23 | 3 | 2 | D | D | Comparative Example |
| 14b | 18 | 18 | 2 | 3 | D | D | Comparative Example |
| 15b | 20 | 25 | 3 | 1 | D | D | Comparative Example |

(continued)

| No. | Average composition of each element in deoxidation product having a size of 1 to 2 μm (mass%) | | | | Heat deformation resistance | Heat fatigue strength resistance | Note |
|---|---|---|---|---|---|---|---|
| | Al | Ca | Cr | Mn | | | |
| 16b | 24 | 20 | 3 | 2 | A | D | Comparative Example |
| 17b | 23 | 24 | 3 | 1 | A | D | Comparative Example |
| 18b | 5 | 1 | 18 | 23 | D | D | Comparative Example |
| 19b | 4 | 1 | 20 | 24 | D | D | Comparative Example |
| 20b | 5 | 1 | 27 | 21 | A | D | Comparative Example |

For the crystal grain diameter of the austenite of the annealed material before wire drawing, electrolytic etching was performed on a transverse cross section of the annealed material in a 10% nitric acid solution, a metal structure was observed with an optical microscope to obtain a particle size number by a cutting method regulated based on JIS G 0-551:2013, and this was defined as the crystal grain diameter.

The tensile strength of the high-strength stainless-steel wire after the final wire drawing was measured based on JIS Z 2241:2011.

The amount of deformation-induced martensite of the high-strength stainless-steel wire after the final wire drawing was calculated from a saturation magnetization value measured by a DC type BH tracer.

The residual stress of the surface layer of the high-strength stainless-steel wire in the longitudinal direction after the final wire drawing was measured using an X-ray stress measurement device.

A method for measuring a fine deoxidation product on the surface layer of the steel wire was as follows. The surface layer of the high-strength stainless-steel wire after the final wire drawing was polished by #500, and then electrolysis was performed in a non-aqueous solution to dissolve a matrix. A non-aqueous solution after the electrolysis was filtered with a filter and an oxide was extracted. As the non-aqueous solution, a methanol solution containing 3% of maleic acid and 1% of tetramethylammonium chloride was used. An electrolysis condition was set to a constant voltage of 100 mV. After that, for the oxide having a diameter of 1 to 2 μm remaining on a filter, the composition analysis was randomly performed on 20 oxides by SEM or EDS to calculate the average composition. The average composition was set as an amount of each element in a case where a total amount of elements detected by SEM or EDS was set to 100%. A non-metal inclusion containing O by EDS analysis and containing Al, Ca, Mn, Si, Fe, Cr, Ti, or the like was defined as the oxide. The diameter of the oxide was calculated by (major axis + minor axis)/2. The average composition thus obtained was set as the average composition of the deoxidation product.

The heat deformation resistance of the high-strength stainless-steel wire after the aging treatment was evaluated by a steel wire twisting test, assuming stress relaxation due to a torsional stress of the coil spring. In evaluation conditions, the distance between chucks was set to 150 mm, heating was performed at 200°C to fix at a predetermined torsional position with a predetermined initial torsional stress $\tau 0$, a torsional stress $\tau$ decreased by the stress relaxation after holding for 24 hours was measured, and a stress relaxation rate 5 was determined by $(1 - \tau/\tau 0) \times 100$ (%).

When die stress relaxation rate was 10% or more, the heat deformation resistance was set to "D", when the stress relaxation rate was 5% or more and less than 10%, the heat deformation resistance was set to "C", when the stress relaxation rate was 3% or more and less than 5%, the heat deformation resistance was set to "B", and when the stress relaxation rate was less than 3%, the heat deformation resistance was set to "A". C, B, and A were considered as pass.

The fatigue resistance characteristic of the high-strength stainless-steel wire after the aging treatment was evaluated by a steel wire twisting test, assuming a fatigue due to a repeated torsional stress of the coil spring. In evaluation conditions, a distance between chucks was set to 150 mm, heating was performed at 200°C, to change a set stress $\tau$ to 200 to 700 MPa, a amplitude stress $\tau a$ was set to $\tau a/\tau = 0.3$, a repeated torsional stress at a speed of 25 Hz was applied up to $10^6$ times, and a stress that does not cause a fracture was evaluated as a fatigue limit.

When the fatigue limit was 200 MPa or less, heat fatigue resistance characteristic was evaluated as "D", when the fatigue limit was more than 200 MPa and 250 MPa or less, the heat fatigue resistance characteristic was evaluated as "C", when the fatigue limit was more than 250 MPa and 350 MPa or less, the heat fatigue resistance characteristic was evaluated as "B", and when the fatigue limit was more than 350 MPa, the heat fatigue resistance characteristic was evaluated as "A". C, B, and A were considered as pass.

As shown in Tables 1A to 2B, in No. 1a to 19a which are examples of the present invention, the chemical composition was in the range of the invention, the strength, the amount of deformation-induced martensite, and the residual stress of the surface layer were in the range of the invention, and the manufacturing conditions are in a preferable range. Therefore, the heat deformation resistance and the heat fatigue-resistant strength were at a pass level. In addition, an average crystal grain diameter of the annealed material was also 30 μm or less, which was excellent in most cases.

In addition, in No. 7a, 8a, 13a to 15a, and 19a, the amount of A1 was set to 0.01% to 0.08%, the amount of Ca was set to 0.005 or less, the amount of O was controlled to 0.005% to 0.0040% by mainly Al deoxidation, the composition of each element in the deoxidation product was in a desirable range, the heat deformation resistance and the fatigue strength was "β" or "A", and the heat deformation resistance and the heat fatigue-resistant strength were at a higher level.

Further, in No. 9a to 12a and 16a to 18a, the amount of Al was set to less than 0.01%, the amount of Ca was set to 0.0010% or less, the amount of O was controlled to 0.003% to 0.008% by mainly Si deoxidation, the composition of each element in the deoxidation product was in a desirable range, the heat deformation resistance and the fatigue strength was "A", and the heat deformation resistance and the heat fatigue-resistant strength were at a higher level.

On the other hand, in No. 1b to 20b which are comparative examples, the steel components or Md30 were beyond an appropriate range, and the strength, the amount of deformation-induced martensite, and the residual stress of the surface layer were beyond appropriate ranges, and the heat fatigue-resistant strength deteriorated. In addition, in No. 3b, 7b, 8b, 11b to 15b, 18b, and 19b, the heat deformation resistance also deteriorated.

(Experimental Example 2)

Next, in order to investigate an effect of the residual stress of the surface layer of the steel wire, the annealed material having a diameter of 4 mm manufactured using steel A and steel H were subjected to final wire drawing processing under the conditions shown in Table 3. That is, the annealed material having a diameter of 4.0 mm was subjected to the cold wire drawing processing with the area reduction rate of 75%, the area reduction rate of the final die was set to 1 % to 26%, and the approach half angle was changed to 2° to 16°. By doing so, a high-strength stainless-steel wire having a diameter of 2.0 mm was finished. The aging treatment was performed at 400° C for 30 minutes assuming a coil spring product. By doing so, high-strength stainless-steel wires of No. 20a to 24a and 21b and 27b were manufactured. In the same manner as in the case of Table 2, the amount of deformation-induced martensite, the strength, and the residual stress of the surface layer were measured, and the heat deformation resistance and the heat fatigue-resistant strength were evaluated. The results are shown in Table 3.

[Table 3]

| No. | Steel | Final die area reduction rate (%) | Die approach angle (half angle) (°) | Crystal grain diameter (μm) | Deformation-induced martensite amount (vol%) | Tensile strength (MPa) | Surface layer residual stress (MPa) | Heat deformation resistance | Heat fatigue strength resistance | Note |
|---|---|---|---|---|---|---|---|---|---|---|
| 1a | A | 7 | 7 | 10 | 72 | 2090 | 420 | B | C | Example of invention |
| 20a | | 3 | 7 | | 69 | 2100 | 330 | B | B | Example of invention |
| 21b | | 15 | 16 | | 68 | 2140 | 610 | D | D | Comparative Example |
| 22b | | 26 | 6 | | 68 | 2120 | 710 | D | D | Comparative Example |
| 23b | | 1 | 7 | | 67 | 2150 | 620 | D | D | Comparative Example |
| 21a | | 7 | 14 | | 72 | 2100 | 320 | B | B | Example of invention |

| No. | Steel | Final die area reduction rate (%) | Die approach angle (half angle) (°) | Crystal grain diameter (μm) | Deformation-induced martensite amount (vol%) | Tensile strength (MPa) | Surface layer residual stress (MPa) | Heat deformation resistance | Heat fatigue strength resistance | Note |
|---|---|---|---|---|---|---|---|---|---|---|
| 8a | H | 7 | 7 | 10 | 40 | 1902 | 215 | B | B | Example of invention |
| 22a | | 3 | 7 | | 42 | 2000 | 120 | A | A | Example of invention |
| 23a | | 15 | 7 | | 40 | 2020 | 420 | B | B | Example of invention |
| 24b | | <u>26</u> | 7 | | 45 | 2100 | <u>680</u> | D | D | Comparative Example |
| 25b | | <u>1</u> | 7 | | 42 | 2030 | <u>590</u> | D | D | Comparative Example |
| 26b | | 7 | <u>16</u> | | 40 | 2150 | <u>690</u> | D | D | Comparative Example |
| 27b | | 7 | <u>2</u> | | 43 | 2020 | <u>590</u> | D | D | Comparative Example |
| 24a | | 7 | 14 | | 40 | 2030 | 110 | A | A | Example of invention |

Underlined parts shows that the values are beyond the range of the present invention.

EP 4 421 200 A1

As shown in Table 3, the residual stress of the surface layer was changed according to the conditions of the final wire drawing processing. In No. 21b to 27b which are comparative examples, the final wire drawing processing was performed under the conditions beyond the preferable conditions. Accordingly, it was found that the residual stress was beyond the range of the present invention, and the heat deformation resistance and the heat fatigue-resistant strength deteriorated.

On the other hand, in No. 20a to 24a which are examples of the present invention, it was found that, by setting the residual stress of the surface layer to 500 MPa or less, excellent heat deformation resistance and heat fatigue resistance characteristics were obtained, and by setting the residual stress of the surface layer to 400 MPa or less, the effect was particularly significant.

(Experimental Example 3)

Next, in order to investigate an effect of the cooling rate of the surface layer of the cast slab, steel of steel G and steel J were melted at approximately 1,600°C in a vacuum melting furnace of 150 kg, and was cast into a casting mold having a diameter of 100 to 250 mm. A material of the casting mold was set to an iron-based, magnesia-based, or silica-based material. The average cooling rate at the time of solidification was changed for steel G and steel J depending on the presence or absence of Kaowool.

By grinding the surface layer of the obtained cast slab, a material for rolling (a billet) in which an internal structure of the cast slab was set as a surface layer structure was prepared. The cooling rate of the surface layer of the material for rolling was slower than the cooling rate of the surface layer of the cast slab before grinding. For the average cooling rate during solidification, a secondary dendrite arm spacing ($\lambda$) in the vicinity of the surface layer of the cross section of the cast slab was measured, and the average cooling rate during solidification was estimated from an average value of $\lambda$ by an equation of the average cooling rate (°C/s) = $(110/\lambda)^{2.2}$.

After that, an annealed material of a stainless-steel wire having a diameter of 4.0 mm was manufactured in the same manner as in Experimental Example 1, and final wire drawing processing was performed in the same manner as in Experimental Example 1. Accordingly, the high-strength stainless-steel wire having a diameter of 2.0 mm was manufactured, and the aging treatment was performed in the same manner as in Experimental Example 1. In the same manner as in the case of Table 2, the amount of deformation-induced martensite, the strength, the residual stress of the surface layer, and the average composition of the deoxidation product were measured, and the heat deformation resistance and the heat fatigue-resistant strength were evaluated. The results are shown in Table 4.

[Table 4]

| Classification | Steel | Solidification rate (°C/s) | Crystal grain diameter ($\mu$m) | Deformation induced martensite amount (vol. %) | Tensile strength (MPa) | Surface layer residual stress (MPa) | Average composition of each element in deoxidation product having a size of 1 to 2 $\mu$m (mass%) | | | | Heat deformation resistance | Heat fatigue strength resistance | Note |
|---|---|---|---|---|---|---|---|---|---|---|---|---|---|
| | | | | | | | Al | Ca | Cr | Mn | | | |
| 7a | G | 40 | 10 | 40 | 2210 | 280 | 28 | 15 | 6 | 3 | A | A | Example of invention |
| 25a | | 5 | 20 | | | | 40 | 20 | 3 | 1 | A | C | Example of invetion |
| 26a | | 300 | 10 | | | | 25 | 15 | 8 | 4 | A | A | Example of invention |
| 10a | J | 40 | 30 | 60 | 2280 | 310 | 8 | 2 | 27 | 20 | A | A | Example of invention |
| 27a | | 5 | 40 | | | | 15 | 3 | 20 | 15 | B | C | Example of invention |
| 28a | | 500 | 20 | | | | 5 | 1 | 30 | 20 | A | A | Example of invention |

As shown in Table 4. in No. 25a to 28a which are examples of the present invention, it was found that, by controlling the components such as Al, Ca, O, and the like, and the solidification rate to a rapid cooling side to appropriately adjust the composition of the fine deoxidation product, the heat deformation resistance and the heat fatigue-resistant strength were improved.

[Industrial Applicability]

As is clear from each of the examples described above, according to the present invention, the high-strength stainless-steel wire for spring having excellent heat deformation resistance and the heat fatigue resistance characteristic can be stably provided, a precision spring used in a warm region can be reduced in weight, and the durability thereof can be improved, which is extremely useful industrially.

**Claims**

1.   A high-strength stainless-steel wire comprising:

C: 0.08% to 0.13%;
Si: 0.2% to 2.0%;
Mn: 0.3% to 3.0%;
P: 0.035% or less;
S: 0.008% or less;
Ni: 5.0% or more and less than 8.0%;
Cr: 14.0% to 19.0%;
N: 0.04% to 0.20%;
Al: 0.10% or less;
0: 0.012% or less;
Ca: 0.0040% or less;
a total of Ti, Nb, Ta and W: 0.50% or less; and
the balance: Fe and impurities,
wherein a value of Md30 represented by the following (1) is 0 (°C) to 30 (°C),
a strength of the steel wire is 1,800 MPa or more,
a deformation-induced martensite amount is 20 to 80 vol.%, and
a tensile residual stress of a surface layer of the steel wire in a longitudinal direction is 500 MPa or less,

$$Md30\ (°C) = 551 - 462\ (C + N) - 9.2Si - 8.1Mn - 29(Ni + Cu) - 13.7Cr - 18.5Mo$$

$$...(1)$$

here, an element symbol in Equation (1) is a content (mass%) of each element in a chemical composition of a steel, and 0 is substituted in a case where the element is not contained.

2.   The high-strength stainless-steel wire according to Claim 1,

wherein Al, O, and Ca in the chemical composition are, in terms of mass%, Al: 0.01% to 0.08%, O: 0.005% or less, and Ca: 0.0005% to 0.0040%, and
an average composition of a deoxidation product having a diameter of 1 to 2 $\mu$m in the steel includes Al: 10% to 35%, Ca: 5% to 30%, Cr: 10% or less, and Mn: 5% or less.

3.   The high-strength stainless-steel wire according to Claim 1,

wherein Al, O, and Ca in the chemical composition are, in terms of mass%, Al: less than 0.01%, O: 0.003% to 0.008%, and Ca: 0.0010% or less, and
an average composition of a deoxidation product having a diameter of 1 to 2 $\mu$m in the steel includes Al: less than 10%, Ca: less than 10%, Cr: 10% to 45%, and Mn: 10% to 30%.

4.   The high-strength stainless-steel wire according to any one of Claims 1 to 3, further comprising, in terms of mass%, one or two or more of Mo: 0.1% to 2.0%, Cu: 0.8% or less, and V: 0.5% or less, instead of a part of Fe.

**5.** A spring formed of the high-strength stainless-steel wire according to any one of Claims 1 to 3.

**6.** A spring formed of the high-strength stainless-steel wire according to Claim 4.

**EP 4 421 200 A1**

<table>
<tr><td colspan="2" align="center">**INTERNATIONAL SEARCH REPORT**</td><td colspan="2">International application No.<br>**PCT/JP2022/028039**</td></tr>
</table>

**A. CLASSIFICATION OF SUBJECT MATTER**

*C22C 38/00*(2006.01)i; *C22C 38/58*(2006.01)i; *C21D 8/06*(2006.01)n; *C21D 9/02*(2006.01)n
FI: C22C38/00 302Z; C22C38/58; C21D8/06 B; C21D9/02 A

According to International Patent Classification (IPC) or to both national classification and IPC

**B. FIELDS SEARCHED**

Minimum documentation searched (classification system followed by classification symbols)

C22C38/00-38/60; C21D8/06; C21D9/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2019/240127 A1 (NIPPON STEEL STAINLESS STEEL CORP) 19 December 2019 (2019-12-19) | 1-6 |
| A | JP 2021-195589 A (NIPPON STEEL STAINLESS STEEL CORP) 27 December 2021 (2021-12-27) | 1-6 |
| A | WO 2021/124511 A1 (NIPPON STEEL STAINLESS STEEL CORP) 24 June 2021 (2021-06-24) | 1-6 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 September 2022** | **04 October 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/028039**

| Patent document cited in search report | | | Publication date (day/month/year) | Patent family member(s) | | | Publication date (day/month/year) |
|---|---|---|---|---|---|---|---|
| WO | 2019/240127 | A1 | 19 December 2019 | KR 10-2020-0124751 | | A | |
| JP | 2021-195589 | A | 27 December 2021 | (Family: none) | | | |
| WO | 2021/124511 | A1 | 24 June 2021 | JP | 6821097 | B1 | |
| | | | | CN | 114829636 | A | |
| | | | | KR 10-2022-0097991 | | A | |

Form PCT/ISA/210 (patent family annex) (January 2015)

**REFERENCES CITED IN THE DESCRIPTION**

**Patent documents cited in the description**

- JP 3542239 B
- JP 4489928 B
- JP 2005200674 A
- JP 6259579 B